# EUROPEAN PATENT APPLICATION

(11) **EP 3 754 995 A1**
(43) Date of publication of application: **23.12.2020**
(21) Application number: 19754134.5
(22) Date of filing: 24.01.2019
(51) Int. Cl.: H04N 21/238, H04N 21/24, H04L 29/06

(54) **VIDEO OPTIMIZATION METHOD, DEVICE, SYSTEM, TERMINAL, NETWORK APPARATUS, AND STORAGE MEDIUM**

(30) Priority: 13.02.2018 CN 201810150917
(71) Applicant: ZTE Corporation, Shenzhen 518057 (CN)
(72) Inventor: ZENG, Lingling, Shenzhen, Guangdong 518057 (CN)
(74) Representative: WBH Wachenhausen Patentanwälte PartG mbB
(86) International application number: PCT/CN2019/072942
(87) International publication number: WO 2019/157926

(57) **Abstract**

A method for video optimization, terminal and network apparatus. The method includes: receiving (S100), by a network apparatus, a video measurement report, wherein the video measurement report carries radio network layer information and application layer information, and the radio network layer information comprises at least one of radio channel quality and radio channel strength; and performing (S101), by the network apparatus, a video optimization strategy according to the video measurement report and returning a video measurement report response, wherein the video measurement report response carries a video optimization instruction.

## Description

### CROSS-REFERENCE TO RELATED APPLICATION

This application is filed on the basis of application No. 201810150917.8 filed February 13, 2018, and claims priority of the Chinese patent application. The content of the Chinese application is incorporated herein by reference in its entirety.

### TECHNICAL FIELD

The present application relates to, but is not limited to, the field of communications technologies, and especially to method, device, system, terminal, network apparatus and storage medium for video optimization.

### BACKGROUND

With the rapid development of mobile communication in the information age, the demand for various service applications is exploding. In 5G era, for services with ultra-high-speed service demand such as virtual reality and high-definition video, their rate can reach up to 10-100 times as compared to the current rate; for services with low delay service demand such as Internet of Vehicles, the end-to-end delay can be shortened by 5 times; for Internet of Things, the number of services that can be accessed is increased by 1000 times as compared to the current amount.

With the growth for services with low delay and high bandwidth, an application deployment as a bearer service is closer to a radio terminal apparatus, which can not only shorten the delay, but also save the transmission bandwidth. In the related network architecture, after a service platform is deployed in the core network, a 5G mobile edge computing (MEC) emerges as the times require, that is, by configuring servers at the edge of a radio network, cloud computing resources are sunk into the radio access network, so as to shorten the physical distance between the radio terminal apparatus and the service platform, thereby meeting the requirements of ultra-low delay and super bandwidth. MEC effectively integrates the radio communication network and Internet technology, and has the characteristics of service localization, short distance and low delay. However, it is not disclosed, in the related technology, how to optimize video in MEC.

### SUMMARY

In view of this, the embodiments of the present application provide method, device, system, terminal, network apparatus, and storage medium for video optimization, which may improve the accuracy of video optimization, thereby improving the quality of video transmission.

The embodiments of the present application provide a video optimization method including:
receiving, by a network apparatus, a video measurement report, wherein the video measurement report carries radio network layer information and application layer information; the radio network layer information comprises at least one of the following: radio channel quality and radio signal strength; and
performing, by the network apparatus, a video optimization strategy according to the video measurement report and returning a video measurement report response, wherein the video measurement report response carries a video optimization indication.

The embodiments of the present application also provide a video optimization method including:
reporting, by a terminal, a video measurement report, wherein the video measurement report carries radio network layer information and application layer information; the radio network layer information comprises at least one of the following: radio channel quality and signal strength;
receiving, by the terminal, a video measurement report response, wherein the video measurement report response carries a video optimization indication; and
performing, by the terminal, a video optimization according to the video optimization indication in the video measurement report response.

The embodiments of the present application also provide a first video optimization device including:
a first reception module, configured to receive a video measurement report, wherein the video measurement report carries radio network layer information and application layer information; the radio network layer information comprises at least one of the following: radio channel quality and radio signal strength;
a strategy module, configured to perform a video optimization strategy according to the video measurement report;
a first sending module, configured to return a video measurement report response, wherein the video measurement report response carries a video optimization indication.

The embodiments of the present application also provide a second video optimization device including:
a second sending module, configured to report a video measurement report, wherein the video measurement report carries radio network layer information and application layer information; the radio network layer information comprises at least one of the following: radio channel quality and radio signal strength;
a second reception module, configured to receive a video measurement report response, wherein the video measurement report response carries a video optimization indication;
an optimization module, configured to perform a video optimization according to the video optimization indication in the video measurement report response.

The embodiments of the present application also provide a network apparatus including: a first processor and a first computer-readable storage medium storing a first instruction which, when executed by the first processor, performs the above methods for video optimization provided by the embodiments of the present application.

The embodiments of the present application also provide a terminal including: a second processor and a second computer-readable storage medium storing a second instruction which, when executed by the second processor, performs the above methods for video optimization provided by the embodiments of the present application.

The embodiments of the present application also provide a storage medium storing a computer program, which, when executed by a processor, performs the above methods for video optimization provided by the embodiments of the present application.

According to the embodiments of the present application, a network apparatus receives a video measurement report, wherein the video measurement report carries radio network layer information and application layer information; the radio network layer information comprises at least one of the following: radio channel quality and radio signal strength. The network apparatus performs a video optimization strategy according to the video measurement report and returning a video measurement report response, wherein the video measurement report response carries a video optimization indication. According to the embodiments of the present application, the video optimization strategy is executed based on the radio network layer information and the application layer information. Since the radio network layer information is used to indicate at least one of the following: radio channel quality and radio signal strength, which reflect signal change and bandwidth change of the radio network layer, the accuracy of the video optimization is improved, thereby improving the quality of video transmission.

In some embodiments, the network apparatus may be any network side apparatus in the mobile edge computing network. Because the mobile edge computing network apparatus is located at the edge of the radio access network, it has the location advantage, and can be informed in time when the radio network layer information changes, so as to perform the video optimization strategy in time and reduce the delay of the video optimization, thereby improving the quality of video transmission.

In some embodiments, the network apparatus may be a mobile edge server, which is located at the edge of the radio access network. It has the location advantage, and can be informed in time when the radio network layer information changes, so as to perform the video optimization strategy in time and reduce the delay of the video optimization, thereby improving the quality of video transmission.

Additional features and advantages of the present application will be described in the following description, and in part become obvious from the description, or understood by implementing the present application. The purpose and other advantages of the application may be realized and obtained by the structure particularly pointed out in the description, claims as well as drawings.

### BRIEF DESCRIPTION OF DRAWINGS

Fig. 1 is a schematic diagram of deploying video services on the edge of radio network in related technologies;
Fig. 2 is a flowchart of a video optimization method for a network apparatus side according to this application;
Fig. 3 is a flowchart of the video optimization method for a terminal side according to this application;
Fig. 4 is a flowchart of the video optimization method according to some embodiments of this application;
Fig. 5 is a flowchart of a method for video code rate adjustment according to some embodiments of this application;
Fig. 6 is a flowchart of a method for transmission control protocol (TCP) window adjustment according to some embodiments of this application;
Fig. 7 is a schematic structural diagram of a first video optimization device according to this application;
Fig. 8 is a schematic structural diagram of a second video optimization device according to this application;
Fig. 9 is a schematic structural diagram of the network apparatus according to this application;
Fig. 10 is a schematic structural diagram of the terminal according to this application;
Fig. 11 is a schematic structural diagram of a video optimization system according to this application.

### DETAILED DESCRIPTION

In order to make the purposes, technical schemes and advantages of the present application more apparent, embodiments of the present application will be described in detail below in conjunction with the accompanying drawings. It should be noted that the embodiments and features thereof in the present application may be arbitrarily combined with each other if there is no conflict.

The steps illustrated in the flowcharts of the drawings may be executed in a computer system, such as a set of computer-executable instructions. Also, although a logical sequence is shown in the flowchart, in some cases, the steps shown or described may be executed in a sequence different than here.

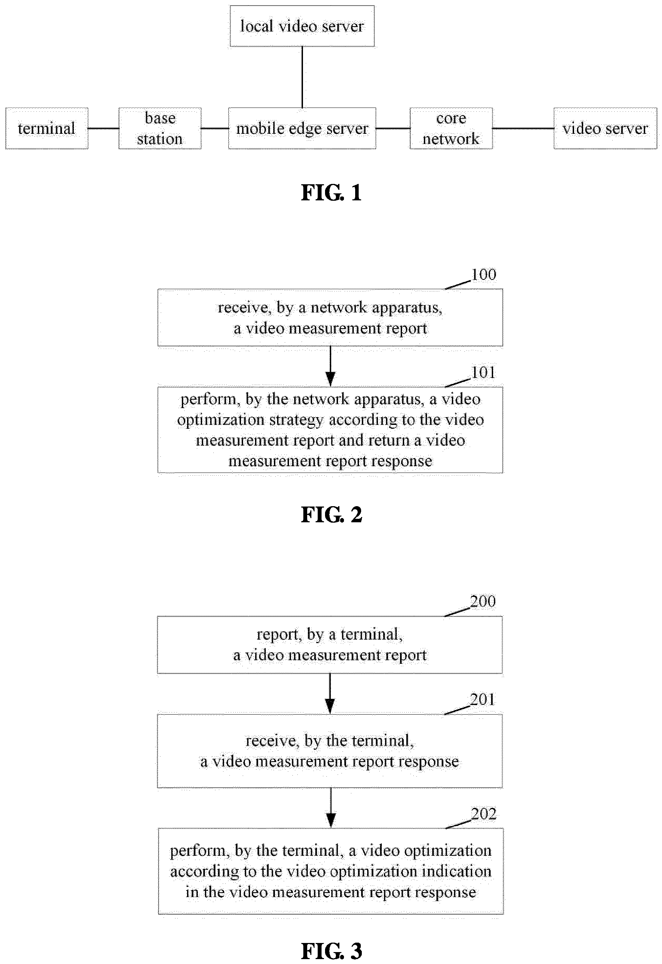

Fig. 1 is a schematic diagram of deploying video services on the edge of radio network. As shown in Fig. 1, by deploying a local video server in a mobile edge computing network to replace a video server in a core network to provide some video services for a terminal apparatus, it may not only reduce the backhaul pressure of high bandwidth services on transmission network, but also localize the high bandwidth services, which performs low delay and greatly improves the video user experience.

Optimization processing, such as adaptive code rate adjustment to video services, etc., is an important manner to improve the quality of video transmission and enhance the video user experience. Related technologies are usually performed on a video server side for adaptive code rate control, and the network quality is evaluated according to the network packet loss rate, delay jitter, etc, to perform video optimization and adjust the video code rate. However, since the radio communication network is easily affected by factors such as user movement, signal attenuation, noise interference, random packet loss, and decoding error, etc., the bandwidth has the characteristics of randomness and time-varying. Meanwhile the video server in the application layer may not perceive the signal change and bandwidth change of the radio network layer, thus the optimization manner of improving the service experience according to the application layer information has low accuracy in the existing technology.

Referring to Fig. 2, a method for video optimization is proposed, which includes:
At step 100, receiving, by a network apparatus, a video measurement report.

In this application, the video measurement report carries radio network layer information and application layer information. The radio network layer information includes at least one of the following: radio channel quality and radio signal strength.

In some embodiments, the video measurement report further carries TCP layer information. When a size of a TCP window needs to be adjusted, the TCP layer information needs to be carried.

Herein, the TCP layer information includes at least one of the following: a size of a TCP window and a serial number of a TCP message.

Herein, the application layer information includes at least one of the following:
a current video code rate, a video playing rate, a video download rate, a video lag information, a video buffer information.

Herein, the video lag information may be represented by at least one of the following: lag times and lag time.

The video buffer information may be represented by at least one of the following: buffer rate, buffer times and buffer delay.

At step 101, performing, by the network apparatus, a video optimization strategy according to the video measurement report, and returning a video measurement report response.

In this application, the network apparatus performing the video optimization strategy according to the video measurement report includes any of the following:
the network apparatus performing a code rate adjustment strategy according to the video measurement report;
the network apparatus performing a TCP window adjustment strategy according to the video measurement report;
the network apparatus performing a code rate adjustment strategy and a TCP window adjustment strategy according to the video measurement report.

In some embodiments, the network apparatus performs strategies based on the video measurement report and radio resources of a radio access network, and a variety of strategy schemes may be adopted. Herein, the radio resources are uniformly allocated by a base station, and the network apparatus may obtain the radio resources information from the base station, such as overload, light load, etc. For example, when the radio channel quality and the radio signal strength are good, the video is not lagged, and the radio resources are sufficient, the code rate may be increased; alternatively, when the radio channel quality and signal quality are good, and the TCP window is small, the TCP window may be expanded. The strategies are not intended to limit the protection scope of this application.

In this application, the video measurement report response carries a video optimization indication.

Herein, the video optimization indication includes at least one of the following: a video code rate adjustment indication, a TCP window adjustment indication, a start termination, a restart, etc.

Herein, the video code rate adjustment indication includes any of the following: a video code rate increase, a video code rate reduction and no change.

Herein, the TCP window adjustment indication includes any of the following: TCP window shrinking, TCP window expanding and no change.

In some embodiments, the video measurement report response further carries at least one of the following: a value of a target video code rate, a value of a target TCP window size, etc.

The video optimization strategy is executed based on the radio network layer information and the application layer information. Since the radio network layer information is used to indicate at least one of the following: the radio channel quality and the radio signal strength, which reflect signal change and bandwidth change of the radio network layer, the accuracy of the video optimization is improved, thus improving the quality of video transmission.

In some embodiments, before receiving, by the network apparatus, the video measurement report, the method further includes:
receiving, by the network apparatus, a video optimization start request and returning a video optimization start response.

In this application, the video optimization start request is used for the terminal to request the network apparatus to start the video optimization strategy. After receiving the video optimization start request, the network apparatus determines whether to perform the video optimization strategy, and returns the video optimization start response. The video optimization start response is used to indicate to the terminal whether to start the video optimization and how to report the video measurement report.

In this application, the video optimization start request includes any of the following: code rate adjustment start request, TCP window adjustment start request, code rate adjustment and TCP window adjustment start request.

The video optimization start response includes any of the following: a code rate adjustment start response, a TCP window adjustment start response, a code rate adjustment and a TCP window adjustment start response.

In this application, the video optimization start request includes at least one of the following:
a terminal identification, a video information of one or more video source files, and a current video code rate.

Herein, the terminal identification includes at least one of the following:
International Mobile Equipment Identity (IMEI), International Mobile Subscriber Identification Number (IMSI), Internet Protocol (IP) address, etc.

Herein, the video information includes at least one of the following: a video resolution, a video height, a video width, and a video source code rate. The video information is an optional video optimization parameter. The video optimization in this application may be adjusted in the optional video optimization parameter provided by the video information. For example, there are two video files in the video server. The first video file has a video resolution of 2K+ and a video source code rate of 8 megabytes (M); and the second video file has a video resolution of 1080P+, and a video source code rate of 2M, so when adjusting the code rate, it may be adjusted between 2M and 8M.

In this application, the video optimization start response includes at least one of the following:
an optimization indication type, a reporting manner, a reporting period, a reporting threshold of the video measurement report and a short video reporting threshold.

Herein, the optimization indication type includes at least one of the following: a start confirmation and a start termination.

Herein, the start confirmation indicates confirmation to start video optimization, and the start termination indicates not to start video optimization.

In some embodiments, if the network apparatus finds that some terminals do not have the right to perform video optimization, or the video optimization service function of the network apparatus is turned off, it may directly return the start termination.

If the video optimization service of the network apparatus is abnormal, it may directly return the video optimization start response, which does not carry the "start confirmation" and the "start termination". At this time, the terminal defaults that the video optimization service is terminated. That is, the terminal will subsequently perform measurement report only if it receives the "start confirmation".

Herein, the reporting manner of the video measurement report may be a periodic reporting manner or an event reporting manner.

Herein, the periodic reporting manner means that the video measurement report is reported using the reporting period as a period, while the event reporting manner means that the video measurement report is reported when the video playing rate, the video download rate, the video lag information, the video buffer information, the radio network layer information, the TCP layer information and the reporting threshold meet certain conditions. For example, the video measurement report is reported when at least one of the following conditions is met:
the video playing rate is less than or equal to a first reporting threshold;
the video download rate is less than or equal to a second reporting threshold;
the video lag information (lag times and/or lag time) is greater than or equal to a third reporting threshold;
the buffer rate is less than or equal to a fourth reporting threshold;
the buffer times and/or the buffer delay is greater than or equal to a fifth reporting threshold;
at least one of the radio channel quality and the radio signal strength is less than or equal to a sixth reporting threshold;
the TCP layer information is less than or equal to a seventh reporting threshold, etc.

Herein, the short video reporting threshold means that the video measurement report is reported only if the video playing time is greater than or equal to the short video reporting threshold, and the video measurement report is not reported if the video playing time is less than the short video reporting threshold.

In some embodiments, the method further includes:
receiving, by the network apparatus, a video optimization termination request and returning a video optimization termination response.

In this application, the video optimization termination request is used for the terminal to request the network apparatus to terminate the video optimization strategy. After receiving the video optimization termination request, the network apparatus determines whether to terminate the video optimization strategy, and returns the video optimization termination response. The video optimization termination response is used to indicate to the terminal whether to terminate the video optimization.

Herein, the video optimization termination request includes any of the following: a video code rate adjustment termination request, a TCP window adjustment termination request, a video code rate adjustment and a TCP window adjustment termination request.

The video optimization termination response includes any of the following: a video code rate adjustment termination response, a TCP window adjustment termination response, a video code rate adjustment and a TCP window adjustment termination response.

Herein, the video optimization termination request carries at least one of the following: a terminal identification, a termination reason, etc.

In this application, the network apparatus may be any network side apparatus. When the network apparatus is a network device in the mobile edge computing network, such as a mobile edge server, because the network device in the mobile edge computing network is located at the edge of the radio access network, it has the location advantage, and may be informed in time when the radio network layer information changes, so as to perform the video optimization strategy in time, reduce the delay of the video optimization, and improve the quality of video transmission.

Referring to Fig. 3, a method for video optimization is proposed, which includes:
At step 200, reporting, by a terminal, a video measurement report.

In this application, the video measurement report carries radio network layer information and application layer information. The radio network layer information includes at least one of the following: radio channel quality and radio signal strength.

In some embodiments, the video measurement report further carries TCP layer information.

Herein, the TCP layer information includes at least one of the following: a size of a TCP window and a serial number of a TCP message.

Herein, the application layer information includes at least one of the following:
current video code rate, video playing rate, video download rate, video lag information, video buffer information.

Herein, the video lag information may be represented by at least one of the following: lag times and lag time.

The video buffer information may be represented by at least one of the following: buffer rate, buffer times and buffer delay.

At step 201: receiving, by the terminal, a video measurement report response.

In this application, the video measurement report response carries a video optimization indication.

Herein, the video optimization indication includes at least one of the following: a video code rate adjustment indication, a TCP window adjustment indication, a start termination, a restart, etc.

Herein, the video code rate adjustment indication includes any of the following: a video code rate increase, a video code rate reduction and no change.

Herein, the TCP window adjustment indication includes any of the following: a TCP window shrinking, a TCP window expanding and no change.

In some embodiments, the video measurement report response further carries at least one of the following: a value of a target video code rate, a value of a target TCP window size, etc.

At step 202: performing, by the terminal, a video optimization according to the video optimization indication in the video measurement report response.

In this application, when the video optimization indication includes the video code rate adjustment indication, the terminal performs a video code rate adjustment. In some embodiments, when the video measurement report response further includes the value of the target video code rate, the value of the video code rate is switched to the value of the target video code rate between the terminal and the video server.

When the video optimization indication includes the TCP window adjustment indication, the terminal performs the TCP window adjustment. In some embodiments, when the video measurement report response further includes the value of the target TCP window size, the value of the TCP window size is adjusted to the value of the target TCP window size between the terminal and the video server.

When the video optimization indication includes the start termination, the terminal stops reporting the video measurement report.

When the video optimization indication includes the restart, the terminal re-reports the video measurement report.

In some embodiments, before the above steps, the method further includes:
sending, by the terminal, a video optimization start request and receiving a video optimization start response;
wherein, reporting, by the terminal, the video measurement report includes: reporting , by the terminal, the video measurement report according to the video optimization start response.

In some embodiments, when the reporting manner of the video measurement report in the video optimization start response is a periodic reporting manner, the terminal reports the video measurement report using the reporting period in the video optimization start response as a period;
when the reporting manner of the video measurement report in the video optimization start response is an event reporting manner, and the video playing rate, the video download rate, the video lag information, the video buffer information, the radio network layer information, the TCP layer information and the reporting threshold in the video optimization start response meet certain conditions, the terminal will report the video measurement report. For example, a video measurement report is reported when at least one of the following conditions is met:
the video playing rate is less than or equal to a first reporting threshold;
the video download rate is less than or equal to a second reporting threshold;
the video lag information (lag times and/or lag time) is greater than or equal to a third reporting threshold;
the buffer rate is less than or equal to a fourth reporting threshold;
at least one of the buffer times and the buffer delay is greater than or equal to a fifth reporting threshold;
at least one of the radio channel quality and the radio signal strength is less than or equal to a sixth reporting threshold;
the TCP layer information is less than or equal to a seventh reporting threshold, etc.

In this application, the terminal may send the video optimization start request before video playing or after video playing, and the sending time is not limited in this application.

In some embodiments, the method further includes:
sending, by the terminal, a video optimization termination request, receiving a video optimization termination response, and stopping reporting the video measurement report.

In the following description, taking the network apparatus as the mobile edge server as an example, the implementation mode is similar when the network apparatus is another network side apparatus, which is within the protection scope of this application, and will not be repeated herein.

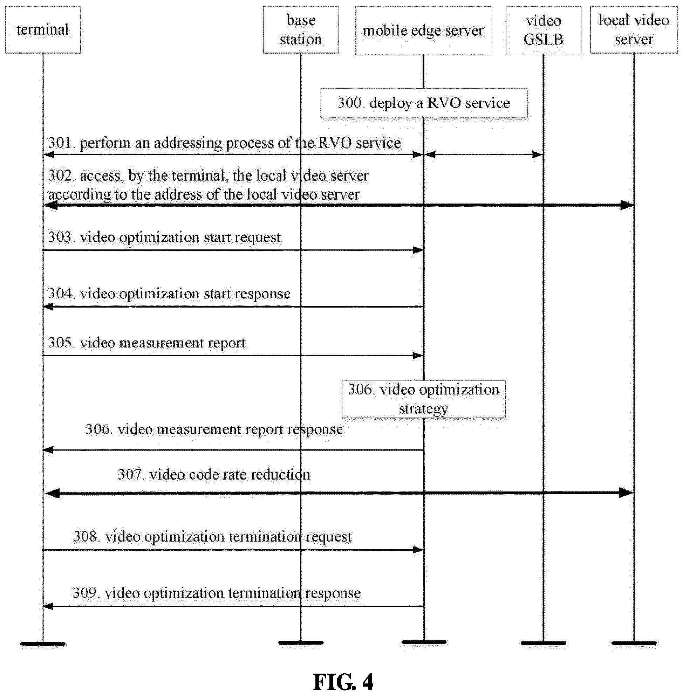

Referring to Fig. 4, a method for video optimization is provided by the embodiments of the present application, including:
At step 300, deploying a RVO service.

In actual implementation, the radio video optimization (RVO) service is deployed on a mobile edge server of a MEC network.

At step 301, performing an addressing process of the RVO service.

In actual implementation, a terminal performs the addressing process of the RVO service, that is, to obtain the address of local video server and the address of RVO service in the MEC network.

In this application, the address of the RVO service is one of the addresses of the mobile edge server. The terminal may obtain the address of the local video server and the address of the RVO service in various ways.

As an example, the terminal sends a Hyper Text Transfer Protocol (HTTP) domain name system (DNS) request to video global server load balance (GSLB), wherein the HTTP DNS request carries a video playing request. The video GSLB returns a HTTP DNS response, which carries the address of the local video server, an Internet Protocol (IP) address and a service port number of the RVO service; then the terminal completes the addressing process of the RVO service. Herein, the IP address and the service port number of the RVO service may be carried in the newly added or reserved fields of the HTTP DNS response.

As another example, the terminal sends a first HTTP DNS request to the GSLB, and the first HTTP DNS request carries a video playing request; the video GSLB returns a first HTTP DNS response, which carries an address of the local video server, then the terminal completes the addressing of the local video server;
the terminal sends a second HTTP DNS request, which carries a uniform domain name of the RVO service; the mobile edge server hijacks HTTP DNS according to the uniform domain name, and returns a second DNS response, which carries an IP address and a service port number of the RVO service; then the terminal completes the addressing process of the RVO service.

At step 302, accessing, by the terminal, the local video server according to the address of the local video server.

At step 303, after the terminal starts playing video, sending a video optimization start request to the RVO service.

In this step, the video optimization start request includes: a terminal identification, a video information of one or more video source files, and a current video code rate.

Herein, the video information includes: video resolution, video height, video width, and video source code rate.

At step 304, returning, by the RVO service, a video optimization start response.

In this step, the video optimization start response includes: an optimization indication type (the value is a start confirmation), a reporting manner of the video measurement report (the value is a periodic reporting manner), a reporting period of the video measurement report (the value is N, where N is an integer greater than or equal to 1).

At step 305, reporting, by the terminal, the video measurement report using N as a period.

In this step, the video measurement report includes: application layer information, radio network layer information and TCP layer information.

At step 306, performing, by the RVO service, a video optimization strategy according to the video measurement, and returning a video measurement report response.

In this step, the video measurement report response includes at least one of the following: value of a video optimization indication (the value is a video code rate reduction, indicating that the video code rate reduction is required), value of a target code rate, etc.

At step 307, performing the video code rate reduction between the terminal and the local video server.

At step 308, after the video playing is finished, sending, by the terminal, a video optimization termination request to the RVO service.

In this step, the video optimization termination request includes: a terminal identification (the value is IMSI) and a termination reason (the value is video playing finished).

At step 309, returning, by the RVO service, a video optimization termination response.

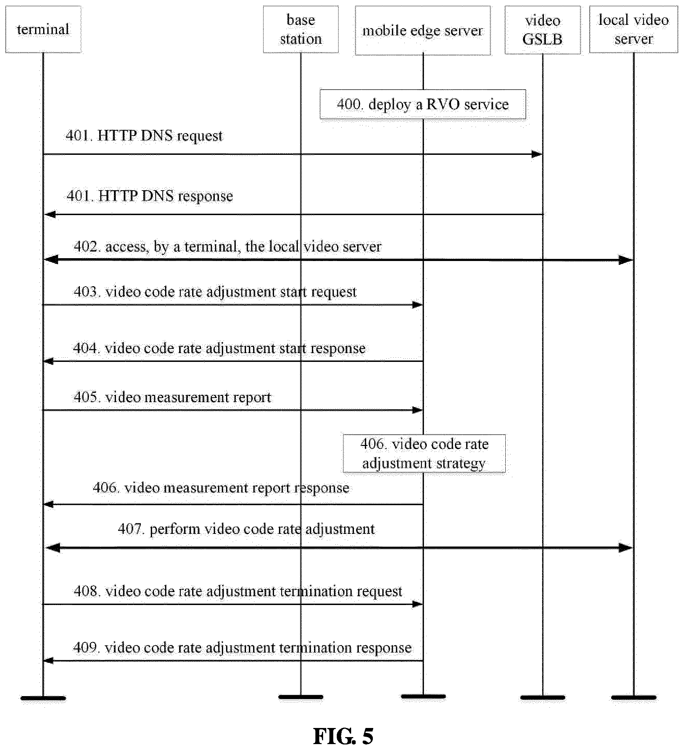

In some embodiments, referring to Fig. 5, the method for video code rate adjustment includes:
At step 400, deploying a radio video optimization (RVO) service on a mobile edge server of the MEC network.

At step 401, performing, by a terminal, an addressing process of the RVO service, that is, the terminal sends a HTTP DNS request to a video GSLB, wherein the HTTP DNS request carries a video playing request; returning, by the video GSLB, a HTTP DNS response, which carries an address of a local video server, an IP address and a service port number of the RVO service, then the terminal completes the addressing process of the RVO service.

Herein, the IP address and the service port number of the RVO service may be carried in the newly added or reserved fields of the HTTP DNS response.

At step 402, accessing, by the terminal, the local video server according to the address of the local video server.

At step 403, after the terminal starts playing video, sending a video code rate adjustment start request to the RVO service.

In this step, the video code rate adjustment start request includes: a terminal identification, a video information of one or more video source files, and a current video code rate.

Herein, the video information includes: video resolution, video source code rate.

At step 404, returning, by the RVO service, a video code rate adjustment start response.

In this step, the video code rate adjustment start response includes: video code rate adjustment indication type (the value is a start confirmation), reporting manner of the video measurement report (the value is a periodic reporting manner), reporting period of the video measurement report (the value is N, where N is an integer greater than or equal to 1).

At step 405, reporting, by the terminal, the video measurement report using N as a period.

In this step, the video measurement report includes: application layer information, radio network layer information.

At step 406, performing, by the RVO service, a video code rate adjustment strategy according to the video measurement report, and returning a video measurement report response.

In this step, the video measurement report response includes at least one of the following: video code rate adjustment indication (the value is a video code rate adjustment, indicating that the video code rate adjustment is required) and target code rate.

At step 407, performing a video code rate adjustment between the terminal and the local video server.

At step 408, after the video playing is finished, sending, by the terminal, a video code rate adjustment termination request to the RVO service.

In this step, the video code rate adjustment termination request includes: terminal identification (the value is IMSI) and termination reason (the value is video playing finished).

At step 409, returning, by the RVO service, a video code rate adjustment termination response.

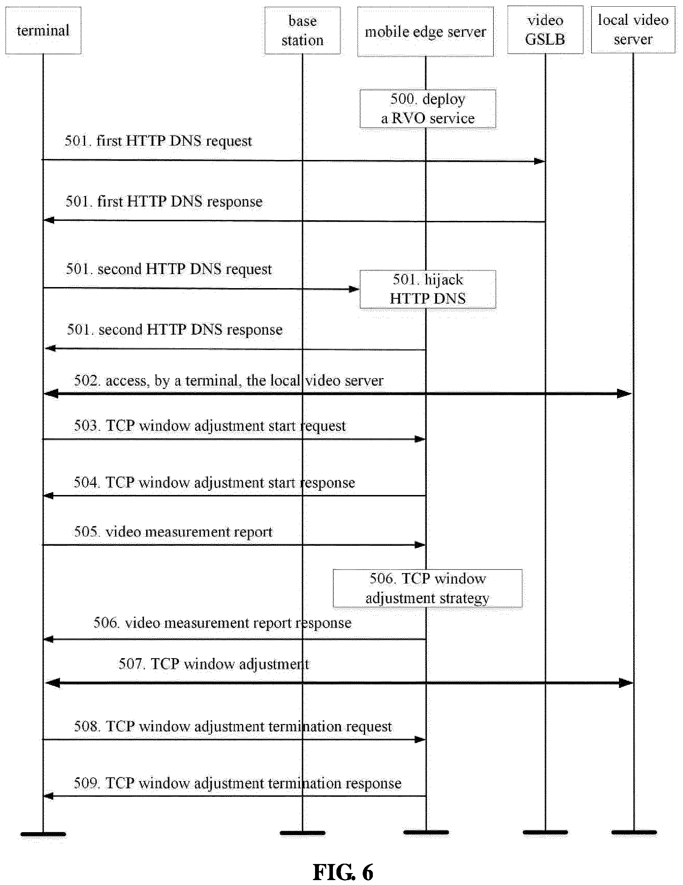

In some embodiments, referring to Fig. 6, the method for TCP window adjustment includes:
At step 500, deploying a radio video optimization (RVO) service on a mobile edge server of the MEC network.

At step 501, sending, by a terminal, a first HTTP DNS request to a GSLB, wherein the first HTTP DNS request carries a video playing request; returning, by the video GSLB, a first HTTP DNS response, which carries an address of a local video server, then the terminal completes the addressing of the local video server.

Then the addressing process of the RVO service is carried out separately, that is, the terminal sends a second HTTP DNS request, and the second HTTP DNS request carries a uniform domain name of the RVO service; the mobile edge server hijacks HTTP DNS according to the uniform domain name, and returns a second HTTP DNS response, which carries an IP address and a service port number of the RVO service, then the terminal completes the addressing process of the RVO service.

At step 502, accessing, by the terminal, the local video server according to the address of the local video server.

At step 503, after the terminal starts playing video, sending a TCP window adjustment start request to the RVO service.

In this step, the TCP window adjustment start request includes: terminal identification, video information of one or more video source files, and current video code rate.

The video information includes: video resolution, video height, video width, and video source code rate.

At step 504, returning, by the RVO service, a TCP window adjustment start response.

In this step, the TCP window adjustment start response includes: TCP window adjustment indication type (the value is a start confirmation), reporting manner of the video measurement report (the value is a periodic reporting manner), reporting period of the video measurement report (the value is N, where N is an integer greater than or equal to 1).

At step 505, reporting, by the terminal, the video measurement report using N as a period.

In this step, the video measurement report includes: application layer information, radio network layer information and TCP layer information.

At step 506, performing, by the RVO service, a TCP window adjustment strategy according to the video measurement report, and returning a video measurement report response.

In this step, the video measurement report response includes: TCP window adjustment indication (the value is a TCP window adjustment, indicating that the TCP window adjustment is required) and target TCP window size.

At step 507, performing the TCP window adjustment between the terminal and the local video server.

At step 508, after the video playing is finished, sending, by the terminal, a TCP window adjustment termination request to the RVO service.

In this step, the TCP window adjustment termination request includes: terminal identification (the value is IMSI) and termination reason (the value is video playing finished).

At step 509, returning, by the RVO service, a TCP window adjustment termination response.

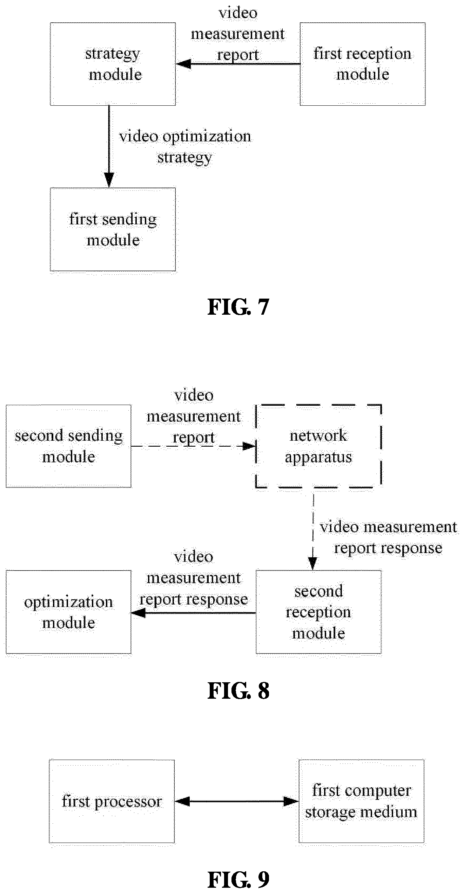

Referring to Fig. 7, the present application provides a video optimization device including:
a first reception module, configured to receive a video measurement report, wherein the video measurement report carries radio network layer information and application layer information; the radio network layer information comprises at least one of the following: radio channel quality and radio signal strength;
a strategy module, configured to perform a video optimization strategy according to the video measurement report;
a first sending module, configured to return a video measurement report response, wherein the video measurement report response carries a video optimization indication.

In some embodiments, the strategy module is configured to perform a video code rate adjustment strategy according to the video measurement report.

In some embodiments, the strategy module is configured to perform a TCP window adjustment strategy according to the video measurement report.

In some embodiments, the strategy module is configured to perform a video code rate adjustment strategy and a TCP window adjustment strategy according to the video measurement report.

In some embodiments, the first reception module is further configured to receive a video optimization start request;
the first sending module is further configured to return a video optimization start response.

In some embodiments, the first reception module is further configured to receive a video optimization termination request;
the first sending module is further configured to return a video optimization termination response.
In some embodiments, the video measurement report further includes TCP layer information;
The TCP layer information includes at least one of the following: a size of a TCP window, and a serial number of a TCP message;
The application layer information includes at least one of the following: current video code rate, video playing rate, video download rate, video lag information and video buffer information.

In some embodiments, the video optimization indication includes at least one of the following: a video code rate adjustment indication, a transmission control protocol window adjustment indication, a start termination, and a restart.

Referring to Fig. 8, the present application provides a video optimization device including:
a second sending module, configured to report a video measurement report, wherein the video measurement report carries radio network layer information and application layer information; the radio network layer information comprises at least one of the following: radio channel quality and radio signal strength;
a second reception module, configured to receive a video measurement report response, wherein the video measurement report response carries a video optimization indication;
an optimization module, configured to perform a video optimization according to the video optimization indication in the video measurement report response.

In some embodiments, the second sending module is further configured to send a video optimization start request;
the second reception module is further configured to receive a video optimization start response.

In some embodiments, the second sending module is further configured to send a video optimization termination request;
the second reception module is further configured to receive a video optimization termination response and notify the second sending module to stop reporting the video measurement report.

Referring to Fig. 9, the present application proposes a network device, including a first processor and a first computer-readable storage medium. A first instruction is stored in the first computer-readable storage medium. When the first instruction is executed by the first processor, the above video optimization method provided by the embodiment of the present application is implemented.

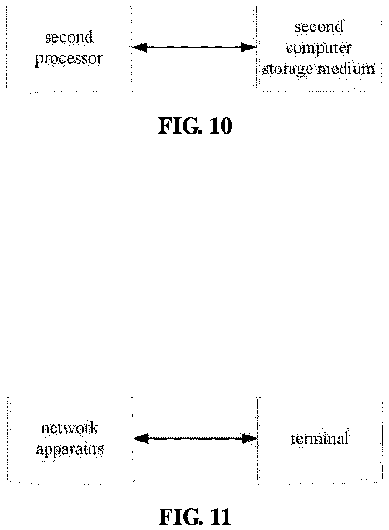

Referring to Fig. 10, the present application proposes a terminal including a second processor and a second computer-readable storage medium. A second instruction is stored in the second computer-readable storage medium. When the second instruction is executed by the second processor, the above video optimization method provided by the embodiment of the present application is implemented.

The present application proposes a storage medium storing computer instructions which, when executed by a processor, cause the processor to perform the above video optimization method provided by the embodiment of the present application.

Herein, the first computer-readable storage medium or the second computer-readable storage medium includes at least one of the following: flash memory, hard disk, multimedia card, card-type memory (for example, secure digital memory card or data register, memory, etc.), random access memory, static random access memory, read-only memory, electrically erasable programmable read-only memory, programmable read-only memory, magnetic memory, magnetic disk, optical disk, etc.

The first processor or the second processor may be a central processing unit (CPU), controller, microcontroller, microprocessor, or other data processing chip.

The network apparatus may further include a first communication module configured to send and receive related information, for example, receive video measurement report, video optimization start request, video optimization termination request, etc., and send video measurement report response, video optimization start response, video optimization termination response, etc.

The terminal may also include a second communication module configured to send and receive related information, for example, send video measurement report, video optimization start request, video optimization termination request, etc., and receive video measurement report response, video optimization start response, video optimization termination response, etc.

Referring to Fig. 11, the present application also proposes a video optimization system, including any of the foregoing network apparatus and any of the foregoing terminals.

Herein, the network apparatus may be any network side apparatus. When the network apparatus is a mobile edge computing network apparatus, such as a mobile edge server, because the mobile edge computing network apparatus is located at the edge of the radio access network, it has the location advantage, and may be informed in time when the radio network layer information changes, so as to perform the video optimization strategy in time, reduce the delay of the video optimization, and improve the quality of video transmission.

Although the embodiments disclosed in the present application are as described above, the descriptions are only for the purpose of facilitating understanding of the present application, and are not intended to limit the present application. It will be understood by those skilled in the art that various changes in form and details may be made therein without departing from the spirit and scope disclosed in this application. The scope of patent protection in this application shall still be subject to the scope defined in the appended claims.

## Claims

1. A method for video optimization, comprising:
receiving, by a network apparatus, a video measurement report, wherein the video measurement report carries radio network layer information and application layer information; the radio network layer information comprises at least one of the following: radio channel quality and radio signal strength;
performing, by the network apparatus, a video optimization strategy according to the video measurement report and returning a video measurement report response, wherein the video measurement report response carries a video optimization indication.

2. The method for video optimization according to claim 1, wherein the network apparatus is a mobile edge server.

3. The method for video optimization according to claim 1, wherein the video measurement report further comprises transmission control protocol layer information;
the transmission control protocol layer information comprises at least one of the following:
size of a transmission control protocol window and serial number of a transmission control protocol message; and
the application layer information comprises at least one of the following: current video code rate, video playing rate, video download rate, video lag information and video buffer information.

4. The method for video optimization according to claim 1, wherein the video optimization indication comprises at least one of the following: video code rate adjustment indication, transmission control protocol window adjustment indication, start termination, and restart.

5. The method for video optimization according to claim 1, wherein, the video optimization strategy performing by the network apparatus according to the video measurement report comprises: performing, by the network apparatus, a video code rate adjustment strategy according to the video measurement report.

6. The method for video optimization according to claim 1, wherein before receiving, by the network apparatus, the video measurement report, the method further comprises:
receiving, by the network apparatus, a video optimization start request and returning a video optimization start response.

7. The method for video optimization according to claim 6, wherein the video optimization start request is a video code rate adjustment start request, while the video optimization start response is a video code rate adjustment start response.

8. The method for video optimization according to claim 6, wherein,
the video optimization start request comprises at least one of the following:
terminal identification, video information of one or more video source files, and current video code rate;
the video optimization start response comprises at least one of the following:
optimization indication type, reporting manner, reporting period, reporting threshold of the video measurement report and short video reporting threshold.

9. The method for video optimization according to claim 8, wherein the video information comprises at least one of the following: video resolution, video height, video width, and video source code rate.

10. The method for video optimization according to claim 1, wherein the method further comprises:
receiving, by the network apparatus, a video optimization termination request and returning a video optimization termination response.

11. The method for video optimization according to claim 10, wherein the video optimization termination request is a video code rate adjustment termination request, while the video optimization termination response is a video code rate adjustment termination response.

12. A method for video optimization, comprising:
reporting, by a terminal, a video measurement report, wherein the video measurement report carries radio network layer information and application layer information; the radio network layer information comprises at least one of the following: radio channel quality and signal strength;
receiving, by the terminal, a video measurement report response, wherein the video measurement report response carries a video optimization indication;
performing, by the terminal, a video optimization according to the video optimization indication in the video measurement report response.

13. The method for video optimization according to claim 12, wherein, before reporting, by the terminal, the video measurement report, the method further comprises:
sending, by the terminal, a video optimization start request and receiving a video optimization start response;
wherein, reporting, by the terminal, the video measurement report comprises: reporting, by the terminal, the video measurement report according to the video optimization start response.

14. The method for video optimization according to claim 12, wherein the method further comprises:
sending, by the terminal, a video optimization termination request, receiving a video optimization termination response, and stopping reporting the video measurement report.

15. A first device for video optimization, comprising:
a first reception module, configured to receive a video measurement report, wherein the video measurement report carries radio network layer information and application layer information; the radio network layer information comprises at least one of the following: radio channel quality and radio signal strength;
a strategy module, configured to perform a video optimization strategy according to the video measurement report;
a first sending module, configured to return a video measurement report response, wherein the video measurement report response carries a video optimization indication.

16. A second device for video optimization, comprising:
a second sending module, configured to report a video measurement report, wherein the video measurement report carries radio network layer information and application layer information; the radio network layer information comprises at least one of the following: radio channel quality and radio signal strength;
a second reception module, configured to receive a video measurement report response,
wherein the video measurement report response carries a video optimization indication;
an optimization module, configured to perform a video optimization according to the video optimization indication in the video measurement report response.

17. A network apparatus, comprising: a first processor and a first computer-readable storage medium storing a first instruction which, when executed by the first processor, performs the video optimization method according to any of claims 1 to 11.

18. A terminal, comprising: a second processor and a second computer-readable storage medium storing a second instruction which, when executed by the second processor, performs the video optimization method according to any of claims 12 to 14.

19. A storage medium storing a computer program, which, when executed by a processor, performs the video optimization method according to any of claims 1 to 11.

20. A storage medium storing a computer program, which, when executed by a processor, performs the video optimization method according to any of claims 12 to 14.
